# EUROPEAN PATENT SPECIFICATION

(11) **EP 0 457 268 B1**
(45) Date of publication and mention of the grant of the patent: **04.09.1996**
(21) Application number: 91107778.2
(22) Date of filing: 14.05.1991
(51) Int. Cl.: G02B 6/38

(54) **Multiple optical fiber connector terminal and method of making same**
Mehrfachstecker für optische Fasern und Methode zu seiner Herstellung
Terminaison d'un connecteur à fibre optique multiple et sa méthode de fabrication

(30) Priority: 16.05.1990 JP 124017/90
(43) Date of publication of application: 21.11.1991
(73) Proprietor: HIROSE ELECTRIC CO., LTD., Shinagawa-ku Tokyo (JP)
(72) Inventor: Kawanami, Norihide, Shinagawa-ku, Tokyo (JP); Okada, Kinjiro, Shinagawa-ku, Tokyo (JP); Kozu, Yoshikazu, Ueda-shi, Nagano-ken (JP)
(74) Representative: Grünecker, Kinkeldey, Stockmair & Schwanhäusser Anwaltssozietät

(56) References cited:
- EP-A- 0 154 262
- GB-A- 2 138 161
- US-A- 4 132 461
- US-A- 4 215 913
- US-A- 4 397 522
- US-A- 4 416 506
- US-A- 4 668 045
- US-A- 4 725 118
- TRANSACTIONS OF THE INSTITUTE OF ELECTRONICS AND COMMUNICATION vol. E66, no. 5, May 1983, TOKYO JP, pp. 305-312; S. NAGASAWA et al.: "Multi-Glass-Rod Optical-Fiber Splicers and Connectors Made by Drawing Technique"

## Description

The present invention relates to a multiple optical fiber terminal connector having a sleeve accommodating a plurality of pins forming elongated fiber receiving passageways and adjacent external surfaces of the pins forming V-shaped grooves between the pins, and a plurality of optical fibers, each extending though and bonded to one of the fiber receiving passageways. Moreover, the present invention relates to a method of making such a multiple optical fiber terminal connector which includes the step of placing a plurality of pins side by side in a sleeve in such a manner that the pins define a plurality of elongated fiber receiving passageways and external adjacent surfaces of the pins form V-shaped grooves.

Such multiple optical fiber terminal connectors are used for closely connecting cords or cables of optical fibers in the field of communication systems, data transmission systems and other optical systems.

A multiple optical fiber connector of the type mentioned above in known from US-A-4,132,461. This prior art document discloses a connecting plug for optical fibers wherein a bunch of cylindrical pins are arranged in a sleeve. Hardening bonding material is introduced into the sleeve so as to secure it with the pins and the optical fibers. The optical fibers are bonded into spaces between adjacent pins and the pins are bonded into the sleeve in a single production step. If the pins are loosely fitted in the sleeve before introducing the bonding material the insertion of the fibers becomes complicated because the pins tend to fall out of the sleeve. This problem could be avoided by very little tolerances of the bore of the sleeve and a diameter of the pins, but would require very precise manufacturing.

The object of the present invention is to provide a multiple optical fiber terminal connector of the type according to the preamble portion of claim 1 which has a high stability and reliability and is easy to assemble, and a method of making such a multiple optical fiber terminal connector.

This problem is solved by a multiple optical fiber terminal connector of the type mentioned at the beginning, wherein the V-shaped grooves between adjacent pins are filled by permanently deformed material of the sleeve pressed thereinto This problem is also solved by a connector of this type wherein the material of the sleeve and of axially extending ridges, being integral therewith, is pressed into the V-shaped grooves. Further, according to the present invention there is provided a multiple optical fiber terminal connector of the type mentioned at the beginning wherein the V-shaped grooves between adjacent pins are filled by deformed material of the sleeve and a plurality of permanently deformed filler members arranged between the sleeve and the pins, pressed into said V-shaped grooves.

According to the present invention there is also provided a method of making a connector as claimed by claim 1 and defined by the preamble of claim 9 which comprises the steps of reducing the diameter of the sleeve by inwardly deforming the sleeve so that deformed material of the sleeve fills the V-shaped grooves between adjacent shaped pins thereby fixing the pins in their positions relative to each other and subsequently securing a plurality of optical fibers in the elongated fiber receiving passageways. Further, the above-mentioned problem is also solved by a method of making a multiple optical fiber terminal connector of the type having the inner ridges which further includes the step of providing the inner wall of the sleeve with axially extending ridges projecting inwardly to the central axis of the sleeve which are also deformed as to fill the V-shaped grooves. Alternatively, instead of providing inner ridges on the sleeve, elongate filler members are inserted into the V-shaped grooves.

In optical fiber transmission lines, the connection between optical fibers is critical. The connection of optical fibers requires a precise registration of optical fibers. Optical fibers are made from glass and have a diameter of 100 microns. There are two requirements for the connector terminals; protecting and reinforcing the optical fibers and registering optical fibers with high-precisions in the order of micrometers.

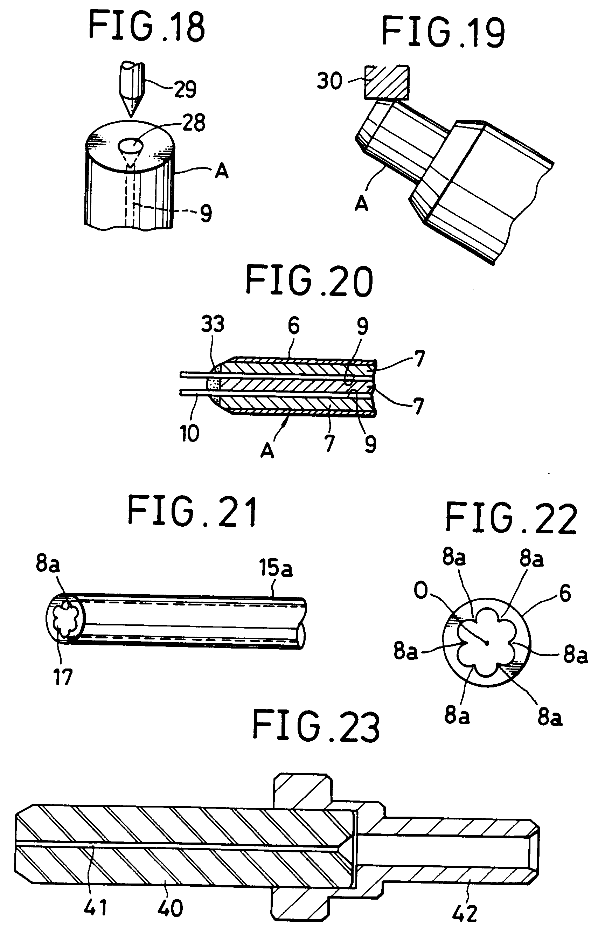

In an attempt to satisfy such requirements, an optical fiber connector terminal such as shown in Fig. 23 has been proposed. This connector terminal includes a terminal body 40 which is made from zirconia ceramic. The terminal body 40 is made by molding a terminal body which is slightly larger than the finished product, sintering it at high temperatures, and grinding a receiving aperture 41 with a wrapping wire or the like to the desired size. The terminal body 40 is then press fitted into a support member 42.

However, it is very difficult to make a long core pin of the mold for the receiving aperture 41 so that it is very difficult to make a thin long receiving aperture 41 which is longer than 10 mm. For this reason, the strength of an optical fiber bonded to the conventional receiving aperture 41 is so small that the finished product is not reliable.

The zirconia ceramic materials require sintering at high temperatures, making the manufacturing process complex and difficult, resulting in the low yield. In addition, thin connector terminals between 1.0 and 1.5 mm in diameter have low bending resistance and are easy to break upon connection and disconnection.

Even if the connector terminal is made from a metal, it is extremely difficult to make a thin long receiving aperture in the connector terminal. Moreover, the terminal body 40 and the support member 42, which are made from different materials, are not compatible and can break upon forcible connection.

To make a multiple optical fiber connector terminal, it is necessary to use simultaneously a plurality of core pins for molding receiving apertures for the multiple optical fibers, which can causes uneven mixtures of ceramic powders, producing nests or break the molding core pins, making the molding itself impossible.

By the above method it is possible to make a connector terminal having a thin long receiving aperture without difficulty.

The above and other features, and advantages of the invention will become more apparent from the following description when taken in conjunction with the accompanying drawings.

### Brief Description of the Drawings

Fig. 1 is a perspective view of a multiple optical fiber connector having a connector terminal according to an embodiment of the invention;
Fig. 2 is a perspective view of the connector terminal of Fig. 1;
Fig. 3 is a longitudinal section of the connector terminal of Fig. 1;
Fig. 4 is a rear view of the connector terminal of Fig. 1;
Fig. 5 is a front view of a terminal body of the connector terminal of Fig. 1;
Fig. 6 is a perspective view showing how to grind a pin for making the connector terminal of Fig. 1;
Fig. 7 shows how to cut a pipe for making a sleeve for the connector terminal of Fig. 1;
Fig. 8 shows how to make a specified inner diameter in the sleeve of Fig. 7;
Figs. 9 and 10 show seven pins and six filler rods placed in the sleeve;
Figs. 11-13 show a connector terminal material with triangular apertures;
Fig. 14 shows how to cut off end portions of the connector terminal material;
Fig. 15 illustrates how to wrap the triangular aperture to form a circular receiving aperture;
Fig. 16 shows how to grind the circumference of the connector terminal material with a cylindrical grinder;
Fig. 17 illustrates how to polish an end of the connector terminal material;
Fig. 18 shows how to make a guide surface in the receiving aperture;
Fig. 19 illustrates how to round a corner of the connector terminal material;
Fig. 20 is a longitudinal section of the connector terminal material into which a plurality of optical fiber are inserted and bonded;
Figs. 21 and 22 show how to make a sleeve for a multiple optical fiber connector terminal according to another embodiment of the invention; and
Fig. 23 is a longitudinal section of a conventional connector terminal.

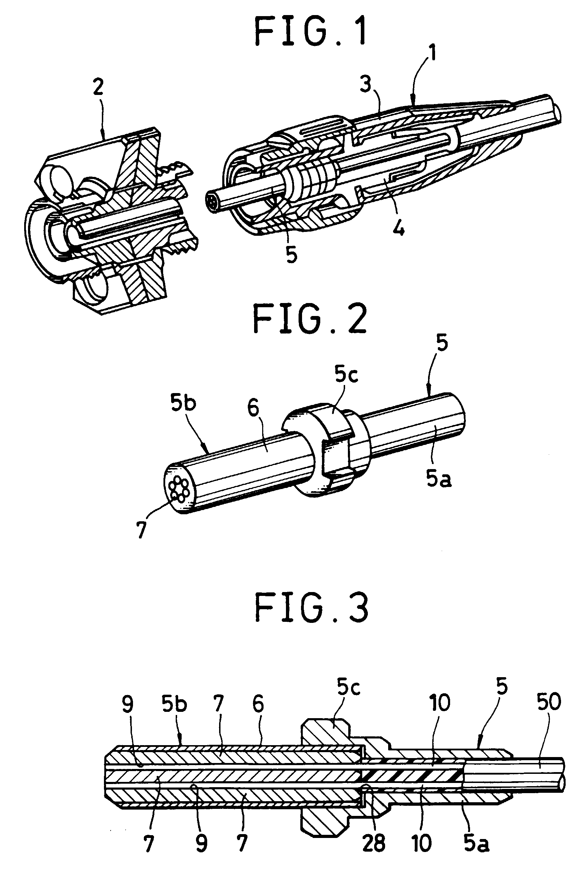

In Fig. 1, the optical fiber connector includes a plug 1 and an adapter 2. The plug 1 has a plug housing 3 for housing a multiple optical fiber connector terminal 5 via a retainer fixture 4.

As Figs. 2-5 show, the connector terminal 5 consists of a support member 5a with a flange 5c and a terminal body 5b attached to the support member 5a. The terminal body 5b has a sleeve 6 in which seven pins 7 are placed with filler rods 8 filling in spaces between the sleeve 6 and the pins 7. Six optical fibers 10 of a fiber cable 50 are bonded to six receiving apertures 9 each defined by the three adjacent pins 7. The filler rods 8 and the sleeve 6 are subjected to a rotary forging process in a rotary swage, for example, to be reduced in diameter so that the filler rods 8 fills spaces between the sleeve 6 and pins 7, thereby disposing the pins 7 and the optical fibers 10.

As has been described above, the six pins 7 are disposed equidistance from the seventh pin 7 at the center O within the sleeve 6 to form six receiving apertures 9 around the center 0. The filler rods 8 are provided in spaces between the sleeve 6 and the pins 7, and the sleeve 6 is reduced in diameter so that the filler rods 8 fill spaces between the sleeve 6 and the pins 7, and the optical fibers 10 are bonded into the receiving apertures 9. As a result, the sleeve 6, the filler rods 8, and the pins 7 are integrated to hold the pins 7 in place, thereby forming thin long apertures 9. This makes it possible to make a long connector terminal. Consequently, the bonding strength of the optical fibers 10 to the receiving apertures 9 is increased, resulting in the increased connector reliability.

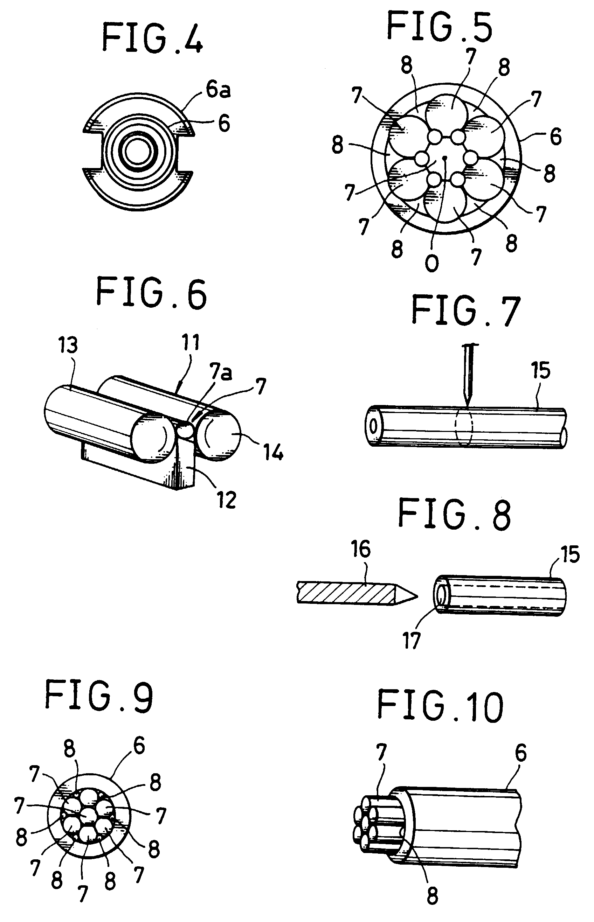

A method of making such an optical fiber connector terminal 5 will be described below with reference to Figs. 6-21.

In Fig. 6, pin material 7a made of stainless steel is cut to a predetermined length (for example, 60mm), subjected to a heat treatment or hardening process, and ground in a grinder 11 to form a pin 7 which has a predetermined degree of circularity and a predetermined degree of surface smoothness. The grinder 11 consists of a support member 12 for supporting the pin material 7a and a pair of grinding rollers 13 and 14, which rotate in opposite directions shown by arrows to grind the pin material 7a. Thus, the pin 7 is made from a hardened stainless steel material (for example, SUS 305).

In Fig. 7, in order to make a sleeve 6, a stainless steel pipe 15 is cut to a predetermined length.

In Fig. 8, an opening 17 of a specified inner diameter is made with a drill 16 or the like. Unlike the pin 7, the resulting sleeve 6 is made from stainless steel which is not hardened so that its hardness is less than that of the pin 7.

In Figs. 9 and 10, six pins 7 and six filler rods 8 are alternatingly disposed around the seventh pin 7 which is disposed at the center of the sleeve 6. The filler rods 8 having a circular or fan shaped cross section are made from stainless steel which is not hardened. Consequently, their hardness is substantially equal to that of the sleeve 6 and less than that of the pins 7.

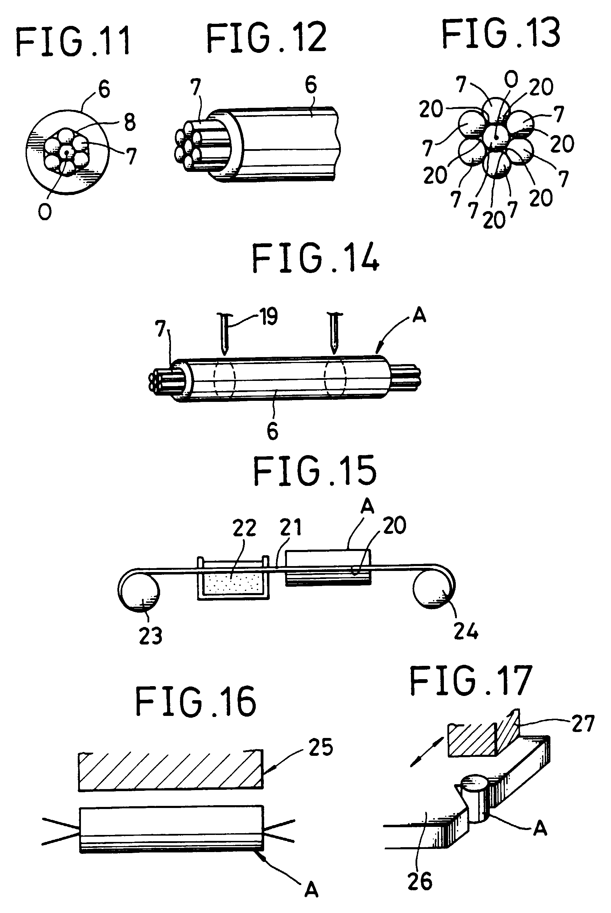

In Figs. 11-13, the sleeve 6 having the seven pins 7 and the six filler rods 8 therein is subjected to a rotary forging process, for example, in a rotary swage to reduce the diameter. The rotary forging process is a process by which the sleeve 6 is struck by one or two pairs of forging dies under continuous or intermittent rotation about its axis, thereby forming a connector terminal material A. The rotary forging process makes the filler rods 8 collapse to fill spaces between the sleeve 6 and the pins 7, thereby disposing the six pins 7 equidistantly from the seventh pin 7 at the center 0. As a result, each of six triangular apertures 20 is formed by every three adjacent pins 7.

In Fig. 14, opposite end portions of the connector terminal material A are cut off with a pair of fine cutters 19. The cutting surfaces are smoothed and cleaned.

In Fig. 15, a wrapping wire 21 is put through each triangle aperture 20. Grinding diamond granules 22 are put on the wrapping wire 21. A pair of reels 23 and 24 are turned back and forth to reciprocate the wrapping wire 21 to grind the wall of the receiving aperture 20, thereby forming a receiving aperture 9 which has a circular cross section.

In Fig. 16, the outside of the connector terminal material A is polished with a cylindrical grinder 25 to provide the desired degree of concentricity.

In Fig. 17, an end surface of the terminal material A is polished with a grinder 27 while being held in place with a holder 26 to provide a right angled end surface.

In Fig. 18, a guiding surface 28 is made at an end of the receiving aperture 9 by an electric discharge process using an electrode 29. Alternatively, the guiding surface 28 may be made by a cutting process.

In Fig. 19, an end of the terminal material A is ground with a grinder 30 to provide a rounded corner. The terminal material A is then cleaned and press fitted into a support member 5a for integration.

In Fig. 20, an adhesive 33 is put in the receiving apertures 9, and optical fibers 10 are put through the receiving apertures 9, thereby building up the adhesive 33 at the end surface so that the projected portions of the optical fibers 10 are also bonded. The built up adhesive 33 and the projected optical fibers 10 are ground off with a grinder to provide a connector terminal 5.

Figs. 22 and 23 show another embodiment of the invention, wherein six inner ridges 8a are made on the inside of the sleeve 6 such that they fill spaces between the pins 7 and the sleeve 6, forming six receiving apertures 9. Six optical fiber 10 are inserted and bonded in the receiving aperture 9 defined by the seven pins 7. The inner ridges 8a and the sleeve 6 are subjected to a rotary forging in a rotary swage, for example, so that the inner ridges 8a fill spaces between the sleeve 6 and the pins 7 to dispose the six pins 7 equidistantly from the seventh pin 7 at the center 0, thereby defining the six receiving apertures 9 around the center 0.

In Fig. 21, a sleeve material 15a with six inner ridges 8a is made by a drawing process and cut to a predetermined length.

In Fig. 22, a specified inner opening 17 is defined, and a circumferential surface of the sleeve material 15a is machined to provide a sleeve 6 which has the desired degree of concentricity.

Six pins 7 are placed between the inner ridges 8a, with one at the center O. The sleeve 6 is then subjected to a rotary forging process in the same way as described above.

Alternatively, the sleeve 6 and the filler rods 8 made from stainless steel which is not hardened may be made from tungsten or beryllium as far as their hardness is less than that of the pins 7 which are made from hardened stainless steel such as SUS 305. The sleeve 6 having the pins 7 and the filler rods 8 were reduced in diameter by a rotary forging in a rotary swage in the above embodiment, but the same results may be obtained by a drawing or press machine.

As has been described above, the multiple optical fiber connector terminal according to the invention does not require any metal mold for the manufacture. The sleeve and the pins are integrated to form a plurality of thin long receiving apertures without the possibility that the grinding granules enter spaces between the sleeve and the pins. Thus, the bonding strength of optical fibers to the thin long receiving apertures is increased, resulting in the increased connector reliability. The multiple optical fiber connector terminal according to the invention also makes the manufacture simple, resulting the reduced manufacturing costs by volume production.

With the multiple optical fiber connector terminal according to the invention it is possible to make a compact multiple optical fiber connector terminal having a plurality of thin long receiving apertures without using any molding core pins. In addition, the sleeve is made from the same material as that of the support member so that it is easy to press fit the connector terminal into the support member. Also, it is possible to solder or weld the connector terminal to the support member, thereby increasing the connector reliability and decreasing the manufacturing costs.

## Claims

1. Multiple optical fiber terminal connector having a sleeve (6) accommodating a plurality of pins (7) forming elongated fiber receiving passageways (9) and adjacent external surfaces of the pins forming V-shaped grooves between the pins (7), and a plurality of optical fibers (10), each extending through and bonded to one of the fiber receiving passageways (9), **characterized in that** the V-shaped grooves between adjacent pins (7) are filled by permanently deformed material of the sleeve (6) pressed thereinto.

2. Multiple optical fiber terminal connector having a sleeve (6) accommodating a plurality of pins (7) forming elongated fiber receiving passageways (9) and adjacent external surfaces of the pins forming V-shaped grooves between the pins (7), and a plurality of optical fibers (10), each extending through and bonded to one of the fiber receiving passageways (9), **characterized in that** the V-shaped grooves between adjacent pins (7) are filled by permanently deformed material of the sleeve (6) and of axially extending ridges (8a) pressed into the V-shaped grooves, said riges projecting inwards towards the central axis of the sleeve (6) and being intergral therewith.

3. Multiple optical fiber terminal connector having a sleeve (6) accommodating a plurality of pins (7) forming elongated fiber receiving passageways (9) and adjacent external surfaces of the pins forming V-shaped grooves between the pins (7), and a plurality of optical fibers (10), each extending through and bonded to one of the fiber receiving passageways (9), **characterized in that** the V-shaped grooves between adjacent pins (7) are filled by permanently deformed material of the sleeve (6) and of a plurality of permanently deformed filler members (8) arranged between the sleeve (6) and the pins (7), and pressed into said V-shaped grooves.

4. Multiple optical fiber terminal connector according to claim 3, **characterized in that** the filler rods (8) in their undeformed state have a circular cross-sectional area and are arranged within the V-shaped grooves between adjacent pins (7).

5. Multiple optical fiber terminal connector according to claim 3, **characterized in that** the filler rods (8) in their undeformed state have a triangular cross-sectional area and are arranged within the V-shaped grooves between adjacent pins (7).

6. Multiple optical fiber terminal connector according to claim 3, **characterized in that** filler rods (8) in their undeformed state have a polygonal cross-sectional area and are arranged within the V-shaped grooves between adjacent pins (7).

7. Multiple optical fiber terminal connector according to one of claims 1 to 6, **characterized in that** the pins (7) arranged within the sleeve (6) have a higher resistance against deformation than the sleeve and the filler rods (6, 8).

8. Multiple optical fiber terminal connector according to one of claims 1 to 7, **characterized in that** the pins (7) are made of hardened stainless steel whereas the sleeve and the filler rods (6, 8) are made of non-hardened stainless steel.

9. A method of making a multiple optical fiber terminal connector as claimed in claim 1 including the step of placing a plurality of pins (7) side by side in a sleeve (6) in such a manner that the pins (7) define a plurality of elongated fiber receiving passageways (9) and external adjacent surfaces of the pins form V-shaped grooves, **characterized by** the steps of reducing the diameter of the sleeve (6) by inwardly permanently deforming the sleeve (6) so that deformed material of the sleeve (6) fills the V-shaped grooves between adjacent pins (7) thereby fixing the pins (7) in their positions relative to each other and subsequently securing a plurality of optical fibers (10) in the elongated fiber receiving passageways (9).

10. A method of making a multiple optical fiber terminal connector as claimed in claim 2 including the step of placing a plurality of pins (7) side by side in such manner that the pins (7) define a plurality of elongated fiber receiving passageways (9) and external adjacent surfaces of the pins form V-shaped grooves, **characterized by** the steps of providing the inner wall of the sleeve (6) with axially extending ridges (8a) projecting inwardly to the central axis of the sleeve (6), reducing the diameter of the sleeve (6) by inwardly permanently deforming the sleeve and the inner ridges (8a) so that deformed material of the sleeve (6) and the inner ridges (8a) fills the V-shaped grooves between the pins (7) thereby fixing the pins (7) in their positions relative to each other and subsequently securing a plurality of optical fibers (10) in the elongated fiber receiving passageways (9).

11. A method of making a multiple optical fiber terminal connector as claimed in claim 3 including the step of placing a plurality of pins (7) side by side in a sleeve (6) in such a manner that the pins (7) define a plurality of elongated fiber receiving passageways (9) and external adjacent surfaces of the pins form V-shaped grooves, **characterized by** the insertion of elongate filler members (8) into the V-shaped grooves and by the steps of reducing the diameter of the sleeve (6) by inwardly permanently deforming the sleeve (6) so that deformed materials of the sleeve (6) and the filler members (8) fills the V-shaped grooves between adjacent pins (7) thereby fixing the pins (7) in their positions relative to each other and subsequently securing a plurality of optical fibers (10) in the elongated fiber receiving passageways (9).

12. Method according to claim 11, **characterized in that** the filler rods (8) in their undeformed state have a circular cross-sectional area and are inserted into the V-shaped grooves between adjacent pins (7).

13. Method according to claim 11, **characterized in that** the filler rods (8) in their undeformed state have a triangular cross-sectional area and are inserted into the V-shaped grooves between adjacent pins (7).

14. Method according to claim 11 , **characterized in that** the filler rods (8) in their undeformed state have a polygonal cross-sectional area and are inserted into the V-shaped grooves between adjacent pins (7).

15. Method according to one of claims 9 to 14, **characterized in that** the pins (7) inserted into the sleeve (6) have a higher resistance against deformation than the deformable elements (6, 8).

16. Method according to one of claims 9 to 15, **characterized in that** the pins (7) are made of hardened stainless steel whereas the deformable elements (6, 8) are made of non-hardened stainless steel.

17. Method according to one of claims 9 to 16, **characterized in that** the diameter reducing process of the sleeve (6) comprises the step of subjecting the sleeve (6) to a rotary forging process.

18. Method according to one of claims 9 to 16, **characterized in that** the diameter reducing process of the sleeve (6) comprises the step of subjecting the sleeve (6) to a drawing process.

19. Method according to one of claims 9 to 16, **characterized in that** the diameter reducing process of the sleeve (6) comprises the step of subjecting the sleeve (6) to a pressing process.

## Patentansprüche

1. Faseroptisches Mehrfachanschlußstück mit einer Hülse (6), die eine Vielzahl von Stiften (7) aufnimmt, die längliche Faseraufnahmedurchgänge (9) bilden und benachbarte Außenflächen der Stifte V-förmige Nuten zwischen den Stiften (7) bilden, und einer Vielzahl von optischen Fasern (10), die sich jeweils durch einen der Faseraufnahmedurchgänge (9) erstrecken und in diesen eingeklebt sind, **dadurch gekennzeichnet,** daß die V-förmigen Nuten zwischen benachbarten Stiften (7) durch bleibend verformtes Material der Hülse (6), das in diese hineingedrückt ist, ausgefüllt sind.

2. Faseroptisches Mehrfachanschlußstück mit einer Hülse (6), die eine Vielzahl von Stiften (7) aufnimmt, die längliche Faseraufnahmedurchgänge (9) bilden und benachbarte Außenflächen der Stifte V-förmige Nuten zwischen den Stiften (7) bilden, und einer Vielzahl von optischen Fasern (10), die sich jeweils durch einen der Faseraufnahmedurchgänge (9) erstrecken und in diesen eingeklebt sind, **dadurch gekennzeichnet,** daß die V-förmigen Nuten zwischen benachbarten Stiften (7) durch bleibend verformtes Material der Hülse (6) und von sich axial erstreckenden Rippen (8a), das in die V-förmigen Nuten gedrückt ist, gefüllt werden, wobei die Rippen nach innen zu der Mittelachse der Hülse (6) hervorstehen und mit dieser integral ausgebildet sind.

3. Faseroptisches Mehrfachanschlußstück mit einer Hülse (6), die eine Vielzahl von Stiften (7) aufnimmt, die längliche Faseraufnahmedurchgänge (9) bilden und benachbarte Außenflächen der Stifte V-förmige Nuten zwischen den Stiften (7) bilden, und einer Vielzahl von optischen Fasern (10), die sich jeweils durch einen der Faseraufnahmedurchgänge (9) erstrecken und in diesen eingeklebt sind, **dadurch gekennzeichnet**, daß die V-förmigen Nuten zwischen benachbarten Stiften (7) durch bleibend verformtes Material der Hülse (6) und einer Vielzahl von bleibend verformten Füllelementen (8), die zwischen der Hülse (6) und den Stiften (7) angeordnet sind, und in die V-förmigen Nuten gedrückt sind, gefüllt sind.

4. Faseroptisches Mehrfachverbindungsstück nach Anspruch 3, **dadurch gekennzeichnet**, daß die Füllstäbe (8) in ihrem unverformten Zustand einen kreisförmigen Querschnitt besitzen und in den V-förmigen Nuten zwischen benachbarten Stiften (7) angeordnet sind.

5. Faseroptisches Mehrfachanschlußstück nach Anspruch 3, **dadurch gekennzeichnet**, daß die Füllstäbe (8) in ihrem unverformten Zustand einen dreieckigen Querschnitt besitzen und in den V-förmigen Nuten zwischen benachbarten Stiften (7) angeordnet sind.

6. Faseroptisches Mehrfachanschlußstück nach Anspruch 3, **dadurch gekennzeichnet,** daß die Füllstäbe (8) in ihrem unverformten Zustand einen polygonalen Querschnitt aufweisen und in den V-förmigen Nuten zwischen benachbarten Stiften (7) angeordnet sind.

7. Faseroptisches Mehrfachanschlußstück nach einem der Ansprüche 1 bis 6, **dadurch gekennzeichnet,** daß die in der Hülse (6) angeordneten Stifte einen höheren Verformungswiderstand besitzen als die Hülse und die Füllstäbe (6,8).

8. Faseroptisches Mehrfachanschlußstück nach einem der Ansprüche 1 bis 7, **dadurch gekennzeichnet**, daß die Stifte (7) aus gehärtetem Edelstahl hergestellt sind, wogegen die Hülse und die Füllstäbe (6,8) aus nicht gehärtetem Edelstahl hergestellt sind.

9. Verfahren zur Herstellung eines faseroptischen Mehrfachanschlußstückes nach Anspruch 1, bei dem eine Vielzahl von Stiften (7) nebeneinander in der Hülse (6) derart plaziert werden, daß die Stifte (7) eine Vielzahl von länglichen Faseraufnahmedurchgängen (9) bilden und benachbarte Außenflächen der Stifte V-förmige Nuten bilden, **gekennzeichnet durch** ein Verringern des Durchmessers der Hülse (6) durch ein nach innen gerichtetes bleibendes Verformen der Hülse (6), so daß verformtes Material der Hülse (6) die V-förmigen Nuten zwischen benachbarten Stiften (7) ausfüllt, wodurch die Stifte (7) in ihrer Lage relativ zueinander festgelegt werden, und durch ein anschließendes Sichern der Vielzahl von optischen Fasern (10) in den länglichen Faseraufnahmedurchgängen (9).

10. Verfahren zur Herstellung eines faseroptischen Mehrfachanschlußstückes nach Anspruch 2, bei dem eine Vielzahl von Stiften (7) nebeneinander so angeordnet werden, daß die Stifte (7) eine Vielzahl von länglichen Faseraufnahmedurchgängen (9) bilden und benachbarte Außenflächen der Stift V-förmige Nuten bilden, **gekennzeichnet durch** das Vorsehen von sich axial erstreckenden Rippen (8a) an der Innenwand der Hülse (6), die in Richtung der Mittelachse der Hülse (6) hervorstehen, durch ein Verringern des Durchmessers der Hülse (6) durch ein nach innen gerichtetes bleibendes Verformen der Hülse und der Innenrippen (8a), so daß verformtes Material der Hülse (6) und der Innenrippen (8a) die V-förmigen Nuten zwischen den Stiften (7) füllt, wodurch die Stifte (7) in ihrer Lage relativ zueinander festgelegt werden, und durch ein anschließendes Sichern der Vielzahl von optischen Fasern (10) in den länglichen Faseraufnahmedurchgängen (9).

11. Verfahren zur Herstellung eines faseroptischen Mehrfachanschlußstückes nach Anspruch 3, bei dem eine Vielzahl von Stiften (7) nebeneinander in einer Hülse (6) so angeordnet werden, daß die Stifte (7) eine Vielzahl von länglichen Faseraufnahmedurchgängen (9) bilden und benachbarte Außenflächen der Stifte V-förmige Nuten bilden, **gekennzeichnet durch** das Einsetzen länglicher Füllelemente (8) in die V-förmigen Nuten, durch ein Verringern des Durchmessers der Hülse (6) durch ein nach innen gerichtetes bleibendes Verformen der Hülse (6), so daß verformtes Material der Hülse (6) und der Füllelemente (8) die V-förmigen Nuten zwischen benachbarten Stiften (7) füllt, wodurch die Stifte (7) in ihrer Lage relativ zueinander festgelegt werden, und durch ein anschließendes Sichern der Vielzahl von optischen Fasern (10) in den länglichen Faseraufnahmedurchgängen (9).

12. Verfahren nach Anspruch 11, **dadurch gekennzeichnet,** daß die Füllstäbe (8) in ihrem unverformten Zustand einen kreisförmigen Querschnitt aufweisen und in die V-förmigen Nuten zwischen benachbarten Stiften (7) eingesetzt werden.

13. Verfahren nach Anspruch 11, **dadurch gekennzeichnet,** daß die Füllstäbe (8) in ihrem unverformten Zustand einen dreiekkigen Querschnitt aufweisen und in die V-förmigen Nuten zwischen benachbarten Stiften (7) eingesetzt werden.

14. Verfahren nach Anspruch 11, **dadurch gekennzeichnet,** daß die Füllstäbe (8) in ihrem unverformten Zustand einen polygonalen Querschnitt aufweisen und in die V-förmigen Nuten zwischen benachbarten Stiften (7) eingesetzt werden.

15. Verfahren nach einem der Ansprüche 9 bis 14, **dadurch gekennzeichnet,** daß die in die Hülse (6) eingesetzten Stifte (7) einen höheren Verformungswiderstand aufweisen als die verformbaren Elemente (6,8).

16. Verfahren nach einem der Ansprüche 9 bis 15, **dadurch gekennzeichnet,** daß die Stifte (7) aus gehärtetem Edelstahl hergestellt sind, wogegen die verformbaren Elemente (6,8) aus nicht gehärtetem Edelstahl hergestellt sind.

17. Verfahren nach einem der Ansprüche 9 bis 16, **dadurch gekennzeichnet**, daß das den Durchmesser der Hülse (6) verringernde Verfahren den Verfahrensschritt aufweist, daß die Hülse (6) einem Wälzprozeß unterworfen wird.

18. Verfahren nach einem der Ansprüche 9 bis 16, **dadurch gekennzeichnet,** daß das den Durchmesser der Hülse (6) verringernde Verfahren den Verfahrensschritt aufweist, daß die Hülse (6) einem Ziehprozeß unterzogen wird.

19. Verfahren nach einem der Ansprüche 9 bis 16, **dadurch gekennzeichnet,** daß das den Durchmesser der Hülse (6) verringernde Verfahren den Verfahrensschritt aufweist, daß die Hülse (6) einem Preßprozeß unterworfen wird.

## Revendications

1. Bout de connecteur à fibre optique multiple comprenant un manchon (6) logeant une pluralité de broches (7) formant des voies de passage allongées de réception de fibre (9), les surfaces externes adjacentes des broches formant des creux en forme de V entre les broches (7), et une pluralité de fibres optiques (10), chacune s'étendant d'un bout à l'autre de et étant collée dans l'une des voies de passage de réception de fibre (9), caractérisé en ce que les creux en forme de V entre les broches adjacentes (7) sont remplis par le matériau du manchon (6) déformé en permanence pressé dans ceux-ci.

2. Bout de connecteur à fibre optique multiple comprenant un manchon (6) logeant une pluralité de broches (7) formant des voies de passage allongées de réception de fibre (9), les surface externes adjacentes des broches formant des creux en forme de V entre les broches (7), et une pluralité de fibres optiques (10), chacune s'étendant d'un bout à l'autre de et étant collée dans l'une des voies de passage de réception de fibre (9), caractérisé en ce que les creux en forme de V entre les broches adjacentes (7) sont remplis par le matériau déformé en permanence du manchon (6) et d'arêtes s'étendant axialement (8a) pressé dans les creux en forme de V, lesdites arêtes saillant intérieurement vers l'axe central du manchon (6) et faisant partie intégrante de celui-ci.

3. Bout de connecteur à fibre optique multiple comprenant un manchon (6) logeant une pluralité de broches (7) formant des voies de passage allongées de réception de fibre (9), les surfaces externes adjacentes des broches formant des creux en forme de V entre les broches (7), et une pluralité de fibres optiques (10), chacune s'étendant d'un bout à l'autre de et étant collée dans l'une voies de passage de réception de fibre (9), caractérisé en ce que les creux en forme de V entre les broches adjacentes (7) sont remplis par le matériau déformé en permanence du manchon (6) et d'une pluralité d'éléments de remplissage déformés en permanence (8) disposés entre le manchon (6) et les broches (7), et pressé dans lesdits creux en forme de V.

4. Bout de connecteur à fibre optique multiple selon la revendication 3, caractérisé en ce que les tiges de remplissage (8) dans leur état non déformé ont une section en coupe transversale circulaire et sont disposées à l'intérieur des creux en forme de V entre les broches adjacentes (7).

5. Bout de connecteur à fibre optique multiple selon la revendication 3, caractérisé en ce que les tiges de remplissage (8) dans leur état non déformé ont une section en coupe transversale triangulaire et sont disposées à l'intérieur des creux en forme de V entre les broches adjacentes (7).

6. Bout de connecteur à fibre optique multiple selon la revendication 3, caractérisé en ce que les tiges de remplissage (8) dans leur état non déformé ont une section en coupe transversale polygonale et sont disposées à l'intérieur des creux en forme de V entre les broches adjacentes (7).

7. Bout de connecteur à fibre optique multiple selon l'une des revendications 1 à 6, caractérisé en ce que les broches (7) disposées à l'intérieur du manchon (6) ont une plus grande résistance contre la déformation que le manchon et les tiges de remplissage (6, 8).

8. Bout de connecteur à fibre optique multiple selon l'une des revendications 1 à 7, caractérisé en ce que les broches (7) sont en acier inoxydable trempé alors que le manchon et les tiges de remplissage (6, 8) sont en acier inoxydable non trempé.

9. Procédé de fabrication d'un bout de connecteur à fibre optique multiple selon la revendication 1, comprenant l'étape de mise en place d'une pluralité de broches (7) côte à côte dans un manchon (6) de manière à ce que les broches (7) définissent une pluralité de voies de passage allongées de réception de fibre (9) et que les surfaces externes adjacentes des broches forment des creux en forme de V, caractérisé par les étapes de réduction du diamètre du manchon (6) par déformation permanente vers l'intérieur du manchon (6) afin que le matériau déformé du manchon (6) remplisse les creux en forme de V entre les broches adjacentes (7) en fixant ainsi les broches (7) dans leurs positions les unes par rapport aux autres, et ensuite de fixation d'une pluralité de fibres optiques (10) dans les voies de passage allongées de réception de fibre (9).

10. Procédé de fabrication d'un bout de connecteur à fibre optique multiple selon la revendication 2, comprenant l'étape de mise en place d'une pluralité de broches (7) côte à côte de manière à ce que les broches (7) définissent une pluralité de voies de passage allongées de réception de fibre (9) et que les surfaces externes adjacentes des broches forment des creux en forme de V, caractérisé par les étapes consistant à munir la paroi intérieure du manchon (6) d'arêtes (8a) s'étendant axialement, saillant intérieurement vers l'axe central du manchon (6), à réduire le diamètre du manchon (6) par déformation permanente vers l'intérieur du manchon et des arêtes intérieures (8a) afin que le matériau déformé du manchon (6) et des arêtes intérieures (8a) remplisse les creux en forme de V entre les broches (7) en fixant ainsi les broches (7) dans leurs positions les unes par rapport aux autres, et ensuite à bloquer une pluralité de fibres optiques (10) dans les voies de passage allongées de réception de fibre (9).

11. Procédé de fabrication d'un bout de connecteur à fibre optique multiple selon la revendication 3, comprenant l'étape de mise en place d'une pluralité de broches (7) côte à côte dans un manchon (6) de manière à ce que les broches (7) définissent une pluralité de voies de passage allongées de réception de fibre (9) et que les surfaces externes adjacentes des broches forment des creux en forme de V, caractérisé par l'insertion d'éléments de remplissage allongés (8) dans les creux en forme de V et par les étapes de réduction du diamètre du manchon (6) par déformation permanente vers l'intérieur du manchon (6) afin que le matériau déformé du manchon (6) et les éléments de remplissage (8) remplisse les creux en forme de V entre les broches adjacentes (7) en fixant ainsi les broches (7) dans leurs positions les unes par rapport aux autres, et ensuite de fixation d'une pluralité de fibres optiques (10) dans les voies de passage allongées de réception de fibre (9).

12. Procédé selon la revendication 11, caractérisé en ce que les tiges de remplissage (8) dans leur état non déformé ont une section en coupe transversale circulaire et sont insérées dans les creux en forme de V entre les broches adjacentes (7).

13. Procédé selon la revendication 11, caractérisé en ce que les tiges de remplissage (8) dans leur état non déformé ont une section en coupe transversale triangulaire et sont insérées dans les creux en forme de V entre les broches adjacentes (7).

14. Procédé selon la revendication 11, caractérisé en ce que les tiges de remplissage (8) dans leur état non déformé ont une section en coupe transversale polygonale et sont insérées dans les creux en forme de V entre les broches adjacentes (7).

15. Procédé selon l'une des revendications 9 à 14, caractérisé en ce que les broches (7) insérées dans le manchon (6) ont une plus grande résistance contre la déformation que les éléments déformables (6, 8).

16. Procédé selon l'une des revendications 9 à 15, caractérisé en ce que les broches (7) sont en acier inoxydable trempé alors que les éléments déformables (6, 8) sont en acier inoxydable non trempé.

17. Procédé selon l'une des revendications 9 à 16, caractérisé en ce que le traitement de réduction du diamètre du manchon (6) comprend l'étape de soumission du manchon (6) à un traitement de forgeage rotatif.

18. Procédé selon l'une des revendications 9 à 16, caractérisé en ce que le traitement de réduction du diamètre du manchon (6) comprend l'étape de soumission du manchon (6) à un traitement d'étirage.

19. Procédé selon l'une des revendications 9 à 16, caractérisé en ce que le traitement de réduction du diamètre du manchon (6) comprend l'étape de soumission du manchon (6) à un traitement d'emboutissage.
